# EUROPÄISCHE PATENTSCHRIFT

(11) **EP 3 894 083 B1**
(45) Veröffentlichungstag und Bekanntmachung des Hinweises auf die Patenterteilung: **25.09.2024**
(21) Anmeldenummer: 19816255.4
(22) Anmeldetag: 02.12.2019
(51) Int. Cl.: B04B 1/08, B04B 11/02, A23L 2/54

(54) **SEPARATOR UND VERFAHREN ZU DESSEN BETRIEB**
SEPARATOR AND METHOD FOR OPERATION THEREOF
SÉPARATEUR ET SON PROCÉDÉ DE FONCTIONNEMENT

(30) Priorität: 12.12.2018 DE 102018131956
(43) Veröffentlichungstag der Anmeldung: 20.10.2021
(73) Patentinhaber: GEA Mechanical Equipment GmbH, 59302 Oelde (DE)
(72) Erfinder: BUSSMANN, Daniel, 59302 Oelde (DE); BATHELT, Thomas, 59302 Oelde (DE); HERBERG, Wolf-Dietrich, 58456 Witten (DE); HUNDERTMARK, Tim, 33334 Gütersloh (DE); STRÖFER, Björn, 59269 Beckum (DE)
(74) Vertreter: Specht, Peter
(86) Internationale Anmeldenummer: PCT/EP2019/083332
(87) Internationale Veröffentlichungsnummer: WO 2020/120203

(56) Entgegenhaltungen:
- CH-A- 204 938
- DE-C- 678 329
- DE-C- 696 796
- US-A- 2 230 210
- US-B2- 9 789 450

## Beschreibung

Die vorliegende Erfindung betrifft einen Separator nach dem Oberbegriff des Anspruchs 1 und ein Verfahren zu dessen Betrieb.

Aus der US 9,789,450 B2 ist eine Anordnung bekannt, welche einen Separator umfasst. Die Gaszumischung erfolgt vor oder nach dem Separator mittels einer gesonderten Vorrichtung.

Gaszuleitungen in Separatoren sind aus der CH 204 938 A, der US 2 230 210 A und der DE 696 796 C bekannt.

Ausgehend von dem vorgenannten Stand der Technik ist es Aufgabe der vorliegenden Erfindung eine effizientere Möglichkeit zur Gasbeimischung in eine Flüssigkeit bereitzustellen.

Die vorliegende Erfindung löst diese Aufgabe durch einen Separator mit den Merkmalen des Anspruchs 1.

Ein erfindungsgemäßer Separator, insbesondere ein Separator mit vertikaler Drehachse, umfasst eine drehbar gelagerte Trommel mit einem Trommelinnenraum zur zentrifugalen Bearbeitung einer Flüssigkeit. Der Separator weist zumindest eine Gaszuleitung zur Einleitung von Gas in die Flüssigkeit auf, welche in den Trommelinnenraum mündet. Die Flüssigkeit in welche das Gas eingeleitet wird kann auch lediglich eine abgetrennte Phase als Bestandteil der ursprünglich in den Separator eingeleiteten Flüssigkeit sein.

Der Separator ermöglicht z.B. eine Phasentrennung einer flüssigen Suspension in mehrere Phasen, wobei der Separator zugleich eine Anreicherung einer oder mehrerer Phasen mit einem oder zwei Gasen ermöglicht.

Im Vergleich zum vorgenannten Stand der Technik entfällt eine dort beschriebene externe Mischvorrichtung. Bei dem erfindungsgemäßen Separator kann das eingeleitete Gas innerhalb des Separators aufgrund der dort herrschenden turbulenten Strömung besser durch die Flüssigkeit aufgenommen werden.

Dabei wird an einer geeigneten Stelle innerhalb des Separators ein Gas in den Suspensionsstrom oder eine hieraus gewonnene Phase eingeleitet, so dass sich das Gas mit der jeweiligen Phase durchmischt. Bei der Zuführung der zwei Gase kann die Dosage von Gas in den Suspensionsstrom über getrennte Positionen innerhalb des Separators bzw. der Zentrifuge erfolgen.

Es ist zudem möglich den Installationsaufwand und die Installationsfläche zu verringern, da eine bisher erforderliche externe Mischvorrichtung entfällt.

Reinigungsanforderungen können für die Mischungsvorrichtung und die Zentrifuge aufgrund der kompakten und integrierten Bauweise identisch ausgeführt werden, was bei Hygieneanwendungen weniger Zertifizierungsaufwand bedeutet.

Vorteilhafte Ausgestaltungen der Erfindung sind Gegenstand der Unteransprüche.

Vorteilhaft kann die Gaszuleitung als ein Zuleitungsrohr oder Zuleitungskanal ausgebildet sein. Dies reduziert den Installationsaufwand und ermöglicht einen Austausch dieses Bauteils.

Der Separator kann zudem einen Sensor zur Ermittlung des Gasgehalts in der gashaltigen Flüssigkeit aufweisen. Ist der Gasgehalt z.B. bei zwei ablaufenden Phasen nach einer Phasentrennung interessant, so kann jeweils ein Sensor zur Überwachung und/oder Ermittlung des Gasgehalts für die jeweilige Phase vorgesehen sein.

Der Separator kann hierfür zumindest ein Ablaufrohr zur Ableitung der gashaltigen Flüssigkeit aus dem Separator aufweisen, wobei das Ablaufrohr den Sensor zur Ermittlung des Gasgehalts in der gashaltigen Flüssigkeit aufweist.

Der Separator kann zudem eine Mess- und/oder Auswerteeinheit aufweisen zur Einstellung des Gasdrucks des über die Gaszuleitung zugeführten Gases. Dies kann u.a. über die Verweilzeit im Separator erfolgen oder über die Zulaufmenge an zu bearbeitender Flüssigkeit.

Besonders bevorzugt kann der Separator ein Ventil zur Einstellung des Gasdrucks des über die Gaszuleitung zugeführten Gases aufweisen, wobei das Ventil entlang der Gaszuleitung angeordnet ist und über die Mess- und/oder Auswerteeinheit einstellbar ist. In diesem Fall ist die Gaszuleitung auch in einem Bereich außerhalb der Trommel des Separators dem erfindungsgemäßen Separator zugeordnet.

Der Separator kann zudem einen Verteilerraum zur radialen Ableitung einer axial, also parallel zur Drehachse des Separators, eingeleiteten Flüssigkeit aufweisen, wobei die Gaszuleitung in den Verteilerraum mündet.

Der Separator kann zudem eine Schälkammer aufweisen, wobei die Gaszuleitung in der Schälkammer mündet. Dabei dient die Schälkammer der kontinuierlichen Ableitung einer in der Trommel des Separators geklärten oder abgetrennten Flüssigkeitsphase.

Der Separator kann in verschiedensten Varianten ausgeführt sein. Erfindungsgemäß ist eine abgedichtete Ausführung erforderlich. Es kann hierbei die Trommel und explizit der Trennraum durch Reibungsdichtungen, wie z.B. Gleitringdichtungen im Zulaufbereich und/oder im Ablaufbereich von der Umgebung abgedichtet oder isoliert sein. Alternativ kann diese Abdichtung oder Isolierung aber auch durch fluidmechanische Dichtungen erfolgen. Bei diesen Dichtungen wird die Abdichtung dadurch hergestellt, dass eine stillstehende Scheibe in einen rotierenden Flüssigkeitsring eintaucht. Alternativ kann aber auch eine rotierende Scheibe in einen stillstehenden Flüssigkeitsring eintauchen.

Der Separator kann in an sich bekannter Weise eine Antriebsspindel aufweisen, wobei die drehbar-gelagerte Trommel über die Antriebsspindel angetrieben wird. Die Gaszuleitung kann dabei zumindest bereichsweise als ein Kanal innerhalb der Antriebsspindel ausgebildet sein, welcher im Trommelinnenraum der Trommel, insbesondere in einer Bodenkammer endständig zu einem sich von der Verteilerkammer radial erstreckenden Verteilerkanal, mündet.

Der Separator kann vorteilhaft zumindest zwei Gaszuleitungen zur Einleiten von Gas an zwei verschiedenen Positionen der Trommel aufweisen. So ist beispielsweise eine Gaszuleitung vor und nach der Phasentrennung einer Suspension möglich und/oder eine gezielte Nachdosierung von Gas zu einer oder mehreren getrennten Phasen. Die Gase können verschieden sein, so z.B. CO₂, ein Inertgas oder auch HCl-Gas zur Konzentrationseinstellung bei der Aufarbeitung von verunreinigter Salzsäure.

Auch eine Fällungsreaktion innerhalb des Separators kann durch die Gaseinleitung insbesondere im Bereich der Verteilerkammer oder der Bodenkammer erreicht werden. In Frage kommt hierzu beispielsweise eine Fällung und Abtrennung eines freien Amins (z.B. als Derivat eines pharmazeutischen Wirkstoffs) in Form eines Hydrochlorids.

Vorteilhaft kann ein erstes Gas z.B. CO₂ in eine Flüssigkeit nach der Einleitung der Flüssigkeit in den Separator über eine erste Gaszuleitung an einer ersten Position in die Trommel eingeleitet werden.

Ein zweites oder das erste Gas kann zudem in die Flüssigkeit nach deren Einleitung in den Separator über eine zweite Gaszuleitung an einer zweiten Position in die Trommel eingeleitet werden. Das zweite Gas kann auch ein Inertgas sein, welches lediglich als Spanngas dient.

Eine bevorzugte Anwendung findet das vorbeschriebene Verfahren in der Karbonisierung eines Getränks, insbesondere von Bier.

Weitere Vorteile, Merkmale und Einzelheiten der Erfindung ergeben sich aus der nachfolgenden Beschreibung, in der mehrere Ausführungsbeispiele der Erfindung anhand der beiliegenden Figuren näher erläutert werden. Der Fachmann wird die in den Figuren, der Beschreibung und den Ansprüchen in Kombination offenbarten Merkmale zweckmäßigerweise auch einzeln betrachten und zu sinnvollen weiteren Kombinationen zusammenfassen. Es zeigen:
- Fig. 1: schematische Darstellung eines erfindungsgemäßen Verfahrens unter Verwendung eines erfindungsgemäßen Separators zur zentrifugalen Bearbeitung einer Flüssigkeit;
- Fig. 2: schematische Schnittansicht einer ersten Variante eines erfindungsgemäßen Separators zur zentrifugalen Bearbeitung einer Flüssigkeit;
- Fig. 3: schematische Schnittansicht einer zweiten Variante eines erfindungsgemäßen Separators zur zentrifugalen Bearbeitung einer Flüssigkeit;
- Fig. 4: schematische Schnittansicht einer dritten Variante eines erfindungsgemäßen Separators zur zentrifugalen Bearbeitung einer Flüssigkeit;
- Fig. 5: schematische Schnittansicht einer vierten Variante eines erfindungsgemäßen Separators zur zentrifugalen Bearbeitung einer Flüssigkeit;
- Fig. 6: schematische Schnittansicht einer fünften Variante eines erfindungsgemäßen Separators zur zentrifugalen Bearbeitung einer Flüssigkeit;
- Fig. 7: schematische Darstellung eines erfindungsgemäßen Verfahrens unter Verwendung einer weiteren Ausführungsvariante eines erfindungsgemäßen Separators zur zentrifugalen Bearbeitung einer Flüssigkeit;
- Fig. 8: schematische Schnittansicht einer sechsten Variante eines erfindungsgemäßen Separators zur zentrifugalen Bearbeitung einer Flüssigkeit;
- Fig. 9: schematische Schnittansicht einer siebenten Variante eines erfindungsgemäßen Separators zur zentrifugalen Bearbeitung einer Flüssigkeit;
- Fig. 10: schematische Darstellung eines erfindungsgemäßen Verfahrens unter Verwendung einer weiteren Ausführungsvariante eines erfindungsgemäßen Separators zur zentrifugalen Bearbeitung einer Flüssigkeit unter Verwendung von zwei Gasen;
- Fig. 11: schematische Schnittansicht einer achten Variante eines erfindungsgemäßen Separators zur zentrifugalen Bearbeitung einer Flüssigkeit; und
- Fig. 12: schematische Schnittansicht einer neunten Variante eines erfindungsgemäßen Separators zur zentrifugalen Bearbeitung einer Flüssigkeit.

Die nachfolgend beschriebenen Ausführungsvarianten zeigen verschiedene Varianten wie eine Gaszufuhr in einen Separator realisiert werden können. Gleiche Bauelemente in einem Separator werden dabei mit gleichen Bezugszeichen bezeichnet.

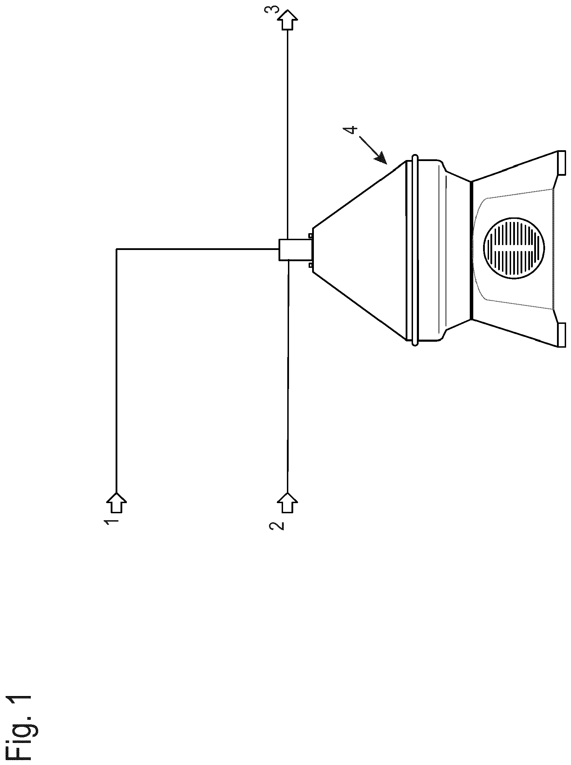

Die Figuren 1,7,10 zeigen die schematische Darstellung von Separatoren sowie die für das Verfahren erforderlichen Zu- und Ableitungen zur Anreicherung einer Flüssigkeit mit einem Gas zur Herstellung einer gashaltigen Flüssigkeit, insbesondere eines CO₂-haltigen Getränks.

Dabei wird eine Flüssigkeit 1 in die rotierende Trommel eines Separators 4 mit vertikaler Drehachse eingeleitet. In die Flüssigkeit 2 oder in eine Phase dieser Flüssigkeit wird ein Gas eingeleitet. Dies erfolgt innerhalb des Separators 4. Den Separator 4 verlässt eine Flüssigkeit 3, in welcher verteilte Gasbläschen angeordnet sind.

Eine typische und im Rahmen der vorliegenden Erfindung bevorzugte Anwendung ist die Karbonisierung eines Getränks, insbesondere von Bier. Die Karbonisierung ist eine Anreicherung von CO₂ in dem jeweiligen Getränk.

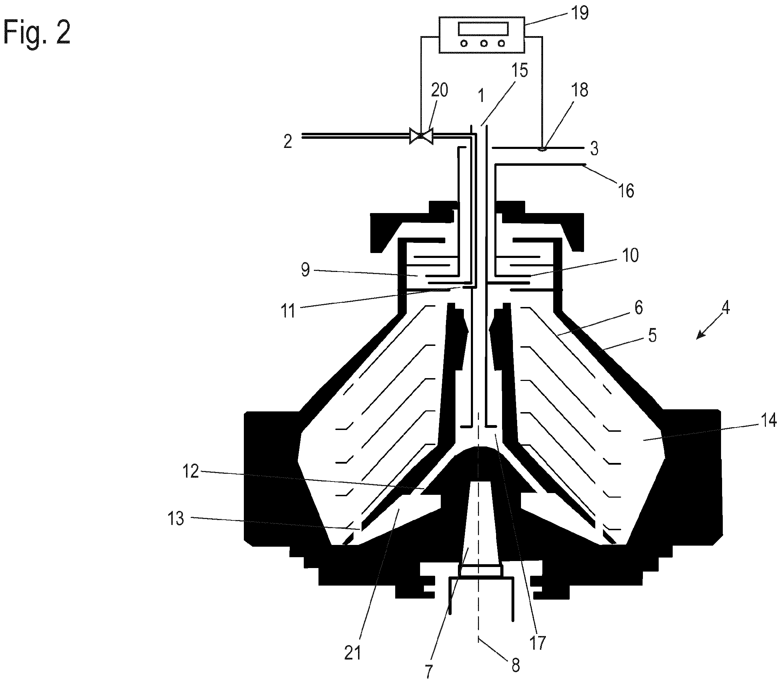

Die Figuren 2-6, 8-9 und 11-12 zeigen das Trommelsystem und Teile des Antriebssystems von Separatoren, wobei verschiedene Varianten der Gasanreicherung in eine Flüssigkeit dargestellt sind.

Fig. 2 zeigt eine erste Ausführungsvariante eines erfindungsgemäßen Separators 4. Der Separator 4 weist eine Trommel 5 auf. Innerhalb der Trommel 5 ist ein Tellerpaket 6 angeordnet. Die Trommel 5 ist drehbar gelagert und weist zum Ausführen einer Rotationsbewegung eine Antriebsspindel 7 auf.

Der Separator 4 ist über ein Zulaufrohr 15 mit einer zu bearbeitenden Flüssigkeit 1 in axialer Richtung befüllbar. Das Zulaufrohr 15 mündet in einen Verteilerraum 17, aus welchem einer oder mehrere Verteilerkanäle 12 die zugeleitete Flüssigkeit in radialer Richtung ableiten. Die Flüssigkeit wird sodann in eine oder mehrere Bodenkammern 21 geleitet und von dort über eine Öffnung 13 in einen Schleuderraum 14 geleitet, wo ein zentrifugales Abscheiden von Feststoffen aus der Flüssigkeit erfolgen kann. Die zentrifugal bearbeitete Flüssigkeit wird sodann von radial außen nach radial innen geleitet.

Zum Sammeln und zum Ableiten einer bearbeiteten Flüssigkeit 3 weist der Separator 4 eine sogenannte Schälkammer 9 auf, in welche ein Greifer 10 mündet. Die Schälkammer 9 befindet sich im oberen Bereich des Separators 4, wohingegen sich die Antriebsspindel 7, und ggf. eine mit der Antriebsspindel verbundene Antriebseinheit, im unteren Bereich des Separators 4 angeordnet sind. Die zentrifugal-bearbeitete Flüssigkeit 3 kann sodann über den Greifer 10 aus dem Separator 4, insbesondere aus der Schälkammer, über ein Ablaufrohr 16 aus dem Separator 4 abgeführt werden.

Fig. 2 zeigt eine Gaszuleitung 11 zur Einleitung eines Gases 2 in die Flüssigkeit 1 innerhalb des Separators 4. Die Gaszuleitung 11 ist in Fig. 2 unterhalb des Greifers 10, also im Strömungsweg der Flüssigkeit 2 vom Schleuderraum 14 zum Greifer 10, angeordnet. Sie mündet in der gleichen Schälkammer 9 wie der Greifer 10. Somit wird die Schälkammer 9 als Kammer genutzt um eine Menge Gas zu der Flüssigkeit zuzuleiten.

Entlang des Ablaufrohres 16 oder entlang einer daran angeschlossenen Verrohrung kann ein Sensor 18 zur Bestimmung und/oder Überwachung des Gasgehalts innerhalb der Flüssigkeit angeordnet sein. Ein solcher Sensor kann z.B. ein Leitfähigkeitssensor sein, oder auch ein inline Sensor zur direkten Bestimmung der Konzentration des gelösten Gases, oder ein anderer geeigneter Sensor.

Nach der Ermittlung oder Überwachung des Gasgehalts kann eine Anpassung erfolgen. Hierfür wird das vom Sensor 18 ermittelte Messsignal an eine Mess- und/oder Auswerteeinheit 19 oder das Steuergerät der Zentrifuge übermittelt. Diese übermittelt ein Einstellsignal an ein Ventil 20 welches entlang der Gaszuleitung angeordnet ist oder entlang einer Verrohrung, welche mit der Gaszuleitung 11 verbunden ist. Das Ventil 20 steuert und/oder regelt den Gasdruck mit welchem das Gas 2 in die Gaszuleitung 11 und von dort in die Flüssigkeit 1 eingeführt wird. Mündet die Gaszuleitung 11 im Bereich der Schälkammer 9, so wirken nur noch geringe zentrifugale Kräfte auf die Flüssigkeit vor dessen Auslass und das zugeleitete Gas wird durch die zentrifugale Bearbeitung nicht oder nur in geringem Maße ausgetrieben.

Zudem erfolgt die Zuleitung des Gases 2 über die Gaszuleitung 11 unweit von der Messstelle bzw. der Position des Sensors 18.

Die Trommel 5 begrenzt einen Trommelinnenraum, wobei unter anderem der Verteilerraum 17, der Bodenkammer 21, der Schleuderraum 14 und die Schälkammer 9 dem Trommelinnenraum zugeordnet sind.

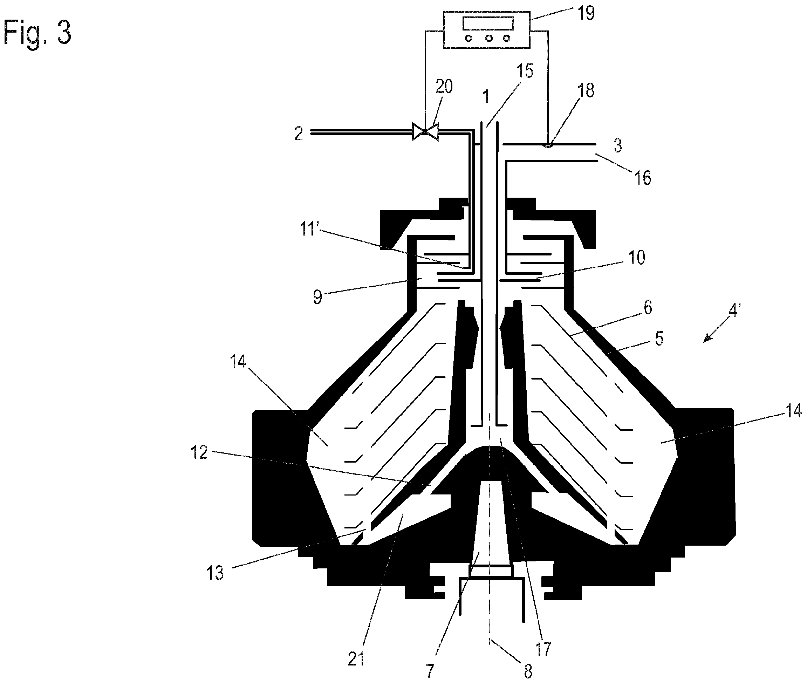

Fig. 3 zeigt eine zu Fig. 2 ähnliche Anordnung einer Gaszuleitung 11' innerhalb eines Separators 4'. Die Gaszuleitung 11' ist in diesem Fall oberhalb des Greifers 10 angeordnet. Die Gaszuleitung 11' mündet dabei ebenfalls in der Schälkammer 9 und ermöglicht somit die Zuleitung innerhalb eine räumlich-begrenzte Kammer, welche u.a. zum Schleuderraum 14 geöffnet ist.

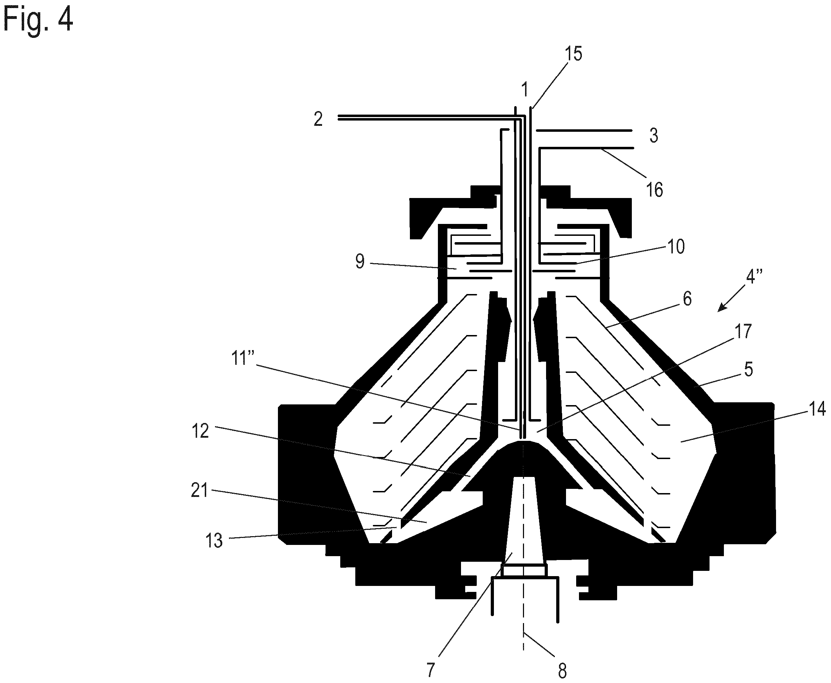

Fig. 4 zeigt eine weitere Variante eines erfindungsgemäßen Separators 4". Die Gaszuleitung 11" erstreckt sich in dieser Variante parallel zum Zuleitungsrohr 15, beispielsweise innerhalb des Zuleitungsrohres 15. Die Gaszuleitung 11" mündet in den Verteilerraum 17 der Trommel 5. Dabei steht die Gaszuleitung 11" gegenüber dem Zuleitungsrohr 15 in den Verteilerraum 17 hervor. Die Einleitung von Gas erfolgt somit bei dieser Variante in axiale Richtung und zwar nach der Zuleitung einer Flüssigkeit 2 in dem Trommelraum vor der Weiterleitung der Flüssigkeit über die Verteilerkanäle 12 in radialer Richtung.

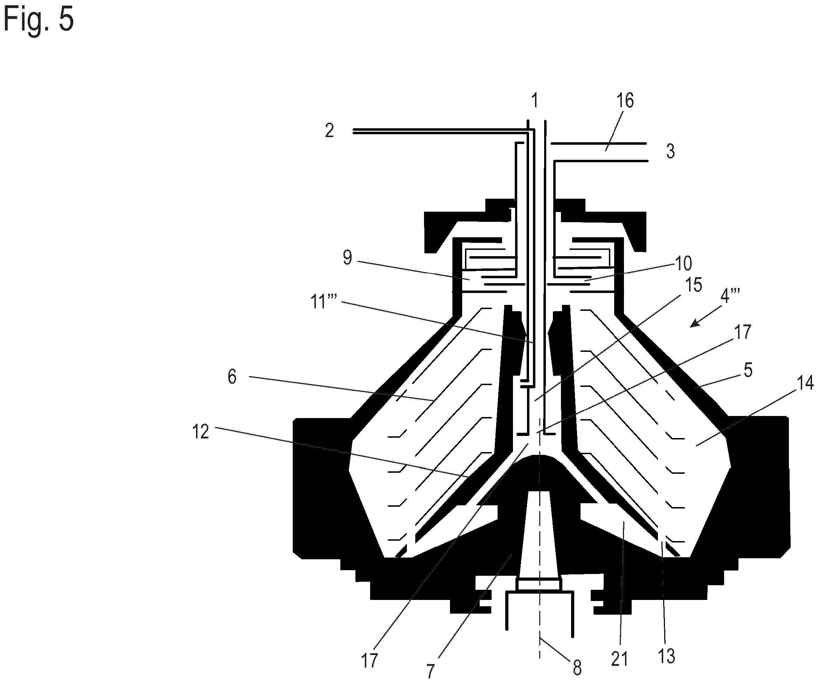

Fig. 5 zeigt eine weitere Variante eines erfindungsgemäßen Separators 4‴. Im Unterschied zur Fig. 4 wird bei dieser Variante das Gas 2 radial zur Drehachse 8 in den Verteilerraum 17, insbesondere in einen oberen Teil des Verteilerraumes 17, eingeleitet. Hierfür erstreckt sich die Gaszuleitung 11‴ durch das Zuleitungsrohr 15 hindurch und mündet radial zur Drehachse 8 in den Verteilerraum 17. Auch in den Varianten der Fig. 4 und 5 wird ein gegenüber dem Schleuderraum 14 wesentlich kleinerer Raum zur Einleitung von Gas in die Flüssigkeit genutzt. In diesem Fall handelt es sich um den Verteilerraum 17.

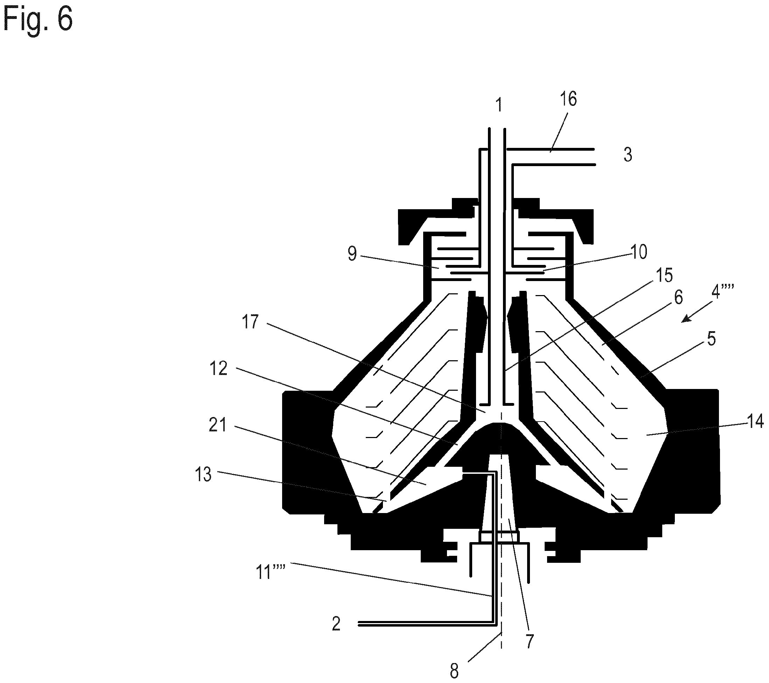

Fig. 6 zeigt eine fünfte Variante eines erfindungsgemäßen Separators 4ʺʺ. Hier erfolgt die Einleitung von Gas mittels einer Gaszuleitung 11ʺʺ über die Antriebsspindel 7 und durch eine mit der Antriebsspindel 7 verbundene Trommelwandung. Dabei erfolgt die Einleitung von Gas radial zur Drehachse 8 in der Bodenkammer 21 des Separators 4ʺʺ in welcher durch den oder die Verteilerkanäle 12 die Flüssigkeit nach dem axialen Zulauf radial umgeleitet wird.

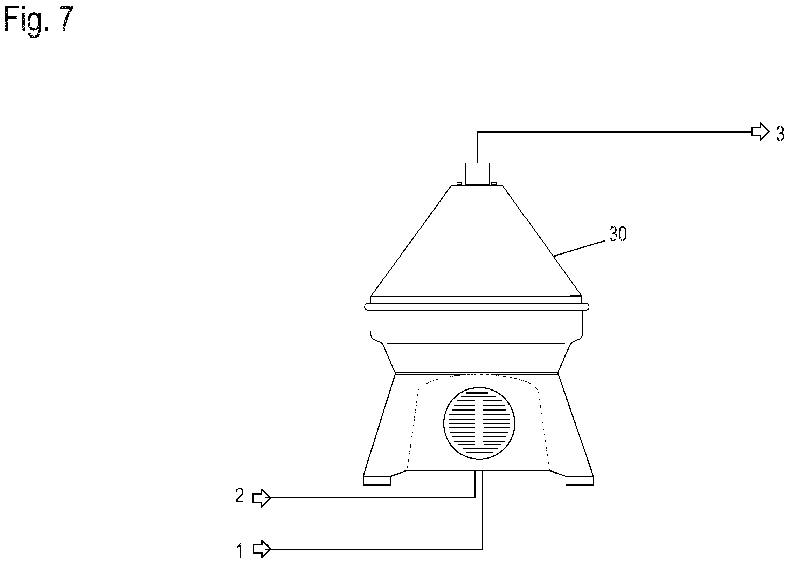

Fig. 7 zeigt eine schematische Darstellung eines Separators 30, sowie einer Zuleitung von Gas 2 und einer Flüssigkeit 1 sowie die Ableitung einer gashaltigen Flüssigkeit 3.

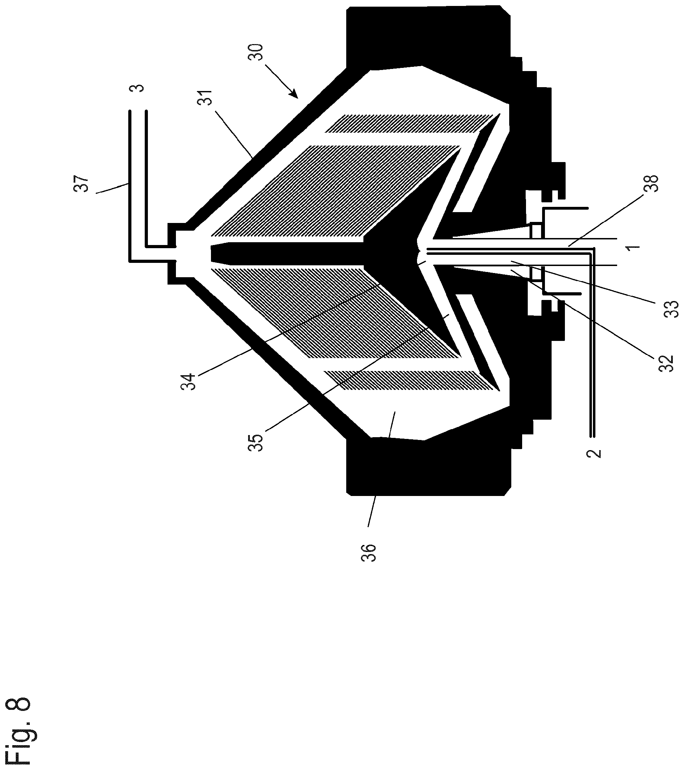

Konkret weist der Separator 30 in der Variante der Fig. 8 einen Trommel 31 auf, welche um die vertikale Drehachse 8 rotierbar gelagert ist. Zum Antrieb der Trommel 31 ist eine Antriebsspindel 32 vorgesehen. Axial durch die Antriebsspindel 32 verläuft ein Zulaufkanal 33 zum Zulauf der zu bearbeitenden Flüssigkeit 1 in einen Verteilerraum 34 des Separators 30. Von dem Verteilerraum 34 verlaufen Verteilerkanäle 35 in radiale Richtung. Die Flüssigkeit kann die Verteilerkanäle 35 endständig verlassen und wird dadurch in einen Schleuderraum 36 eingeleitet. Innerhalb des Schleuderraumes 36 ist ein Tellerpaket angeordnet. Die Ausleitung der Flüssigkeit an einem axialen Ende der Trommel 31 kann über ein Ablaufrohr 37 erfolgen. Die Einleitung des Gases 2 in den Separator 30 kann über eine Gaszuleitung 38 erfolgen, welche parallel, insbesondere koaxial zur Drehachse 8 innerhalb des Zulaufkanals 33 angeordnet ist. Auch der Zulaufkanal verläuft vorzugsweise koaxial zur Drehachse 8 des Separators 30.

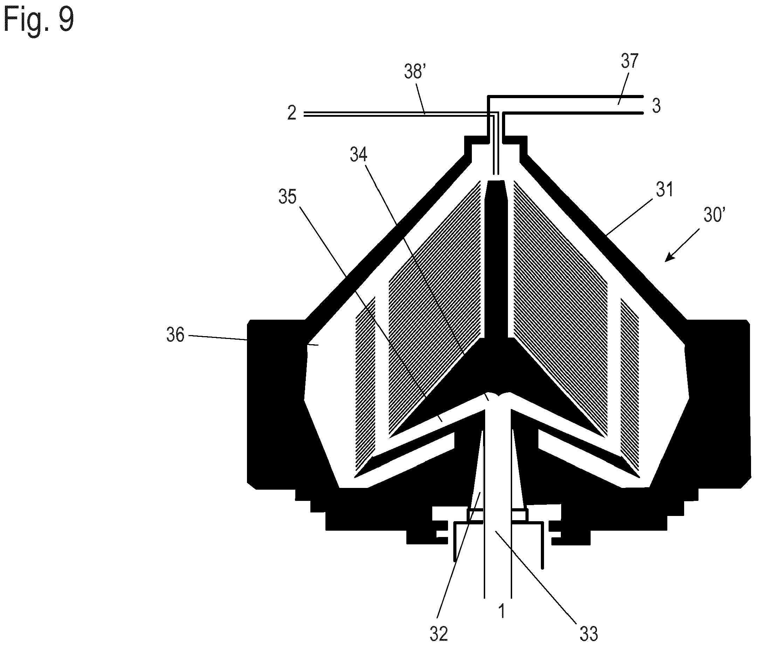

In Fig. 9 ist eine zweite Ausführungsvariante in Abwandlung des Separators 30' der Fig. 8 dargestellt. In diesem Fall ist die Gaszuleitung 38' zumindest innerhalb der Trommel 31 coaxial oder parallel zur Drehachse 8 in oder entlang des Ablaufrohres 37 angeordnet.

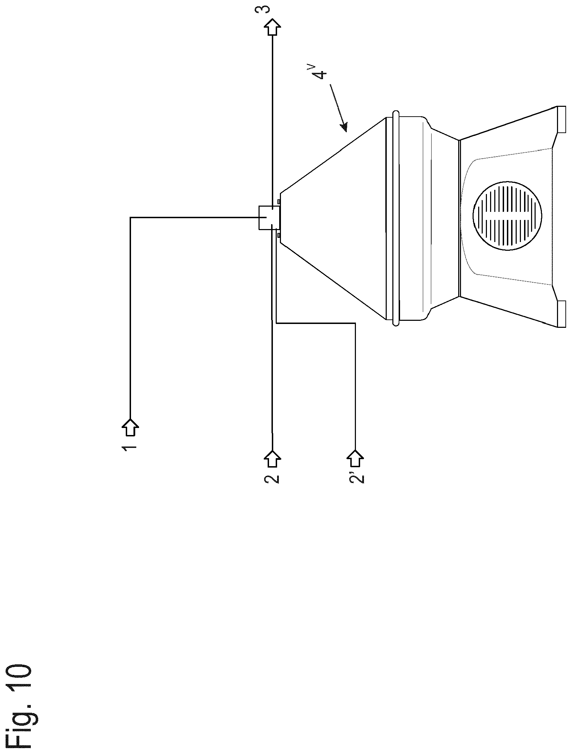

Fig. 10 zeigt eine schematische Darstellung einer Zuleitung von zwei Gasen 2, 2' und einer Flüssigkeit 1 in einen Separator 4^{v}.

Separator 4^{v} weist hierfür zwei Gaszuleitungen 11' und 11" auf, welche in den oberen Bereich der Trommel 5 geführt sind.

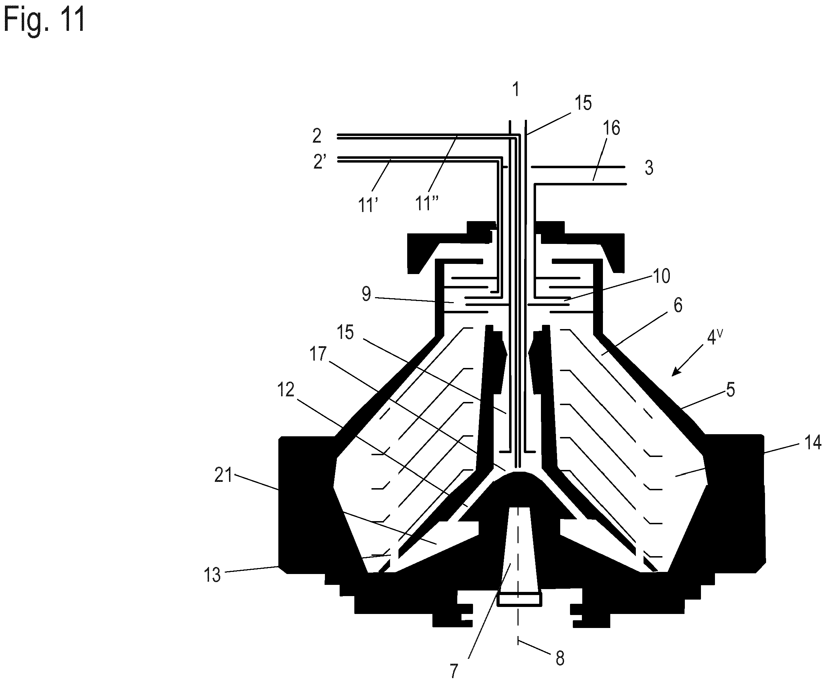

Fig. 11 zeigt einen Querschnitt des Separators 4". Es ist eine erste Gaszuleitung 11' im Bereich der Schälkammer 9 vorgesehen und eine zweite Gaszuleitung 11" welche in dem Verteilerraum 17 mündet. Durch die erste Gaszuleitung11' kann ein erstes Gas in die Flüssigkeit geleitet werden und durch die zweite Gaszuleitung 11" kann ein zweites Gas in die Flüssigkeit geleitet werden. Es ist möglich, dass das zweite Gas 2' CO₂ ist und dass das erste Gas 2 ein Inertgas, z.B. Stickstoff ist. Das erste und das zweite Gas können allerdings auch identisch sein. In einer bevorzugten Anwendung kann das zweite Gas 2' im Verteilerraum 17 des Separators 4^{v} in die Flüssigkeit 1 eingeleitet werden, während das erste Gas in der Schälkammer 9 als Spanngas genutzt wird um einem Ausschäumen von CO₂ aus der Flüssigkeit während der zentrifugalen Bearbeitung der Flüssigkeit entgegenzuwirken. Idealerweise kann ein dadurch geschaffenes Gaspolster in der Schälkammer 9 nicht bis zur Mündung des Greifers 10 reichen, sondern oberhalb des Greifers liegen.

Eine solche Betriebsweise setzt eine Abdichtung des rotierenden Systems wie bereits vorher beschrieben voraus.

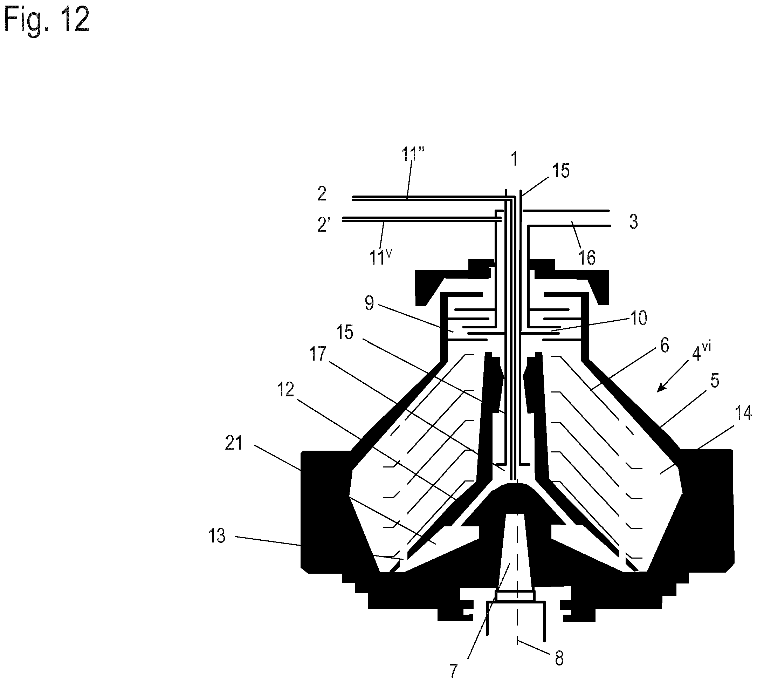

Fig. 12 zeigt eine weitere gegenüber der Fig. 11 abgewandelte Variante eines Separators 4^{vi}. Dabei erfolgt eine Zuleitung eines ersten Gases 2 anstatt innerhalb der Schälkammer 9 innerhalb des Ablaufrohres 16 über eine Gaszuleitung 11^{v}.

### Bezugszeichen

- 1: Flüssigkeit
- 2: Gas
- 2': Gas
- 3: Gashaltige Flüssigkeit
- 4: Separator
- 4': Separator
- 4": Separator
- 4‴: Separator
- 4ʺʺ: Separator
- 4^{v}: Separator
- 4^{vi}: Separator
- 5: Trommel
- 6: Tellerpaket
- 7: Antriebsspindel
- 8: Drehachse
- 9: Schälkammer
- 10: Greifer
- 11: Gaszuleitung
- 11': Gaszuleitung
- 11": Gaszuleitung
- 11‴: Gaszuleitung
- 11ʺʺ: Gaszuleitung
- 11": Gaszuleitung
- 12: Verteilerkanäle
- 13: Öffnung
- 14: Schleuderraum
- 15: Zulaufrohr
- 16: Ablaufrohr
- 17: Verteilerraum
- 18: Sensor
- 19: Mess- und/oder Auswerteeinheit
- 20: Ventil
- 21: Bodenkammer

- 30: Separator
- 30': Separator
- 31: Trommel
- 32: Antriebsspindel
- 33: Zulaufkanal
- 34: Verteilerraum
- 35: Verteilerkanal
- 36: Schleuderraum
- 37: Ablaufrohr
- 38: Gaszuleitung
- 38': Gaszuleitung

## Patentansprüche

1. Separator (4, 4', 4", 4‴, 4ʺʺ, 4^{v}, 4^{vi}, 30, 30'), insbesondere Separator (4, 4', 4", 4‴, 4ʺʺ, 4^{v}, 4^{vi}, 30, 30') mit vertikaler Drehachse (8), umfassend eine drehbar gelagerte Trommel (5, 31) mit einem Trommelinnenraum zur zentrifugalen Bearbeitung einer Flüssigkeit (1), wobei der Separator(4, 4', 4", 4‴, 4ʺʺ, 4^{v}, 4^{vi}, 30, 30') zumindest eine Gaszuleitung (11, 11', 11", 11‴, 11ʺʺ, 11", 38, 38') zur Einleitung von Gas (2, 2') in die Flüssigkeit (1) aufweist, welche in den Trommelinnenraum mündet,
**dadurch gekennzeichnet, dass** der Separator (4, 4', 4", 4‴, 4ʺʺ, 4^{v}, 4^{vi}, 30, 30') in einer abgedichteten Ausführung ausgebildet ist, wobei ein Trennraum der Trommel (5, 31) im Zulaufbereich und/oder im Ablaufbereich durch Gleitringdichtungen oder fluidmechanische Dichtungen von der Umgebung abgedichtet oder isoliert ist.

2. Separator nach Anspruch 1, **dadurch gekennzeichnet, dass** die Gaszuleitung (11, 11', 11", 11‴, 11ʺʺ, 11^{v}, 38, 38') als ein Zuleitungsrohr und/oder als Zuleitungskanal ausgebildet ist.

3. Separator nach Anspruch 1 oder 2, **dadurch gekennzeichnet, dass** der Separator (4, 4', 4", 4‴, 4ʺʺ, 4^{v}, 4^{vi}, 30, 30') einen Sensor (18) zur Ermittlung des Gasgehalts in der gashaltigen Flüssigkeit (4) aufweist.

4. Separator nach Anspruch 1, 2 oder 3, **dadurch gekennzeichnet, dass** der Separator (4, 4', 4", 4‴, 4ʺʺ, 4^{v}, 4^{vi}, 30, 30') ein Ablaufrohr (16) zur Ableitung einer gashaltigen Flüssigkeit (4) aus dem Separator (4, 4', 4", 4‴, 4ʺʺ, 4^{v}, 4^{vi}, 30, 30') aufweist, wobei das Ablaufrohr (16) den Sensor (18) zur Ermittlung des Gasgehalts in der gashaltigen Flüssigkeit (4) aufweist.

5. Separator nach einem der vorhergehenden Ansprüche, **dadurch gekennzeichnet, dass** der Separator (4, 4', 4", 4‴, 4ʺʺ, 4^{v}, 4^{vi}, 30, 30') eine Mess- und/oder Auswerteeinheit (19) aufweist zur Einstellung des Gasdrucks des über die Gaszuleitung (11, 11', 11^{v}, 11‴, 11ʺʺ, 11^{v}, 38, 38') zugeführten Gases (1, 1').

6. Separator nach einem der vorhergehenden Ansprüche, **dadurch gekennzeichnet, dass** der Separator (4, 4', 4", 4‴, 4ʺʺ, 4^{v}, 4^{vi}, 30, 30') ein Ventil (20) zur Einstellung des Gasdrucks des über die Gaszuleitung (11, 11', 11^{v}, 11‴, 11ʺʺ, 11^{v}, 38, 38') zugeführten Gases (1, 1') aufweist, wobei das Ventil (20) entlang der Gaszuleitung (11, 11', 11^{v}, 11‴, 11ʺʺ, 11^{v}, 38, 38') angeordnet ist und über die Mess- und/oder Auswerteeinheit (19) einstellbar ist.

7. Separator nach einem der vorhergehenden Ansprüche, **dadurch gekennzeichnet, dass** der Separator (4", 4‴, 30) einen Verteilerraum (17) zur radialen Ableitung der axial eingeleiteten Flüssigkeit (1) aufweist, wobei die Gaszuleitung (11", 11‴) in dem Verteilerraum (17) mündet.

8. Separator nach einem der vorhergehenden Ansprüche, **dadurch gekennzeichnet, dass** der Separator (4, 4') eine Schälkammer (9) aufweist, wobei die Gaszuleitung (11, 11') in der Schälkammer (9) mündet.

9. Separator nach einem der vorhergehenden Ansprüche, **dadurch gekennzeichnet, dass** der Separator (4ʺʺⁱ, 30) eine Antriebsspindel (7, 32) aufweist, wobei die Trommel (5, 31) über die Antriebsspindel (7, 32) angetrieben wird, wobei die Gaszuleitung (11ʺʺ, 38) zumindest bereichsweise als ein Kanal innerhalb der Antriebsspindel (7, 32) ausgebildet ist, welcher im Trommelinnenraum der Trommel (5, 31) mündet.

10. Separator nach einem der vorhergehenden Ansprüche, **dadurch gekennzeichnet, dass** der Separator (4^{v}, 4^{vi}) zumindest zwei Gaszuleitungen (11', 11", 11^{v}) zum Einleiten von Gas an zwei verschiedenen Positionen der Trommel (5) aufweist.

11. Verfahren zum Betrieb eines Separators (4^{v}, 4^{vi}) nach einem der vorhergehenden Ansprüche, **dadurch gekennzeichnet, dass** ein erstes Gas (2) in die Flüssigkeit (1) nach deren Einleitung in den Separator (4^{v}, 4^{vi}) über eine erste Gaszuleitung (11") eingeleitet wird.

12. Verfahren nach Anspruch 11, **dadurch gekennzeichnet, dass** ein zweites Gas (2') in die Flüssigkeit (1) nach deren Einleitung in den Separator (4^{v}, 4^{vi}) über eine zweite Gaszuleitung (11', 11^{v}) eingeleitet wird.

13. Verfahren nach Anspruch 11 oder 12, **dadurch gekennzeichnet, dass** das erste und/oder zweite Gas (2, 2') CO₂ ist.

14. Verfahren nach Anspruch 11 oder 12, **dadurch gekennzeichnet, dass** das Verfahren eine Karbonisierung eines Getränks, insbesondere von Bier, ist.

## Claims

1. Separator (4, 4', 4", 4‴, 4ʺʺ, 4^{v}, 4^{vi}, 30, 30'), in particular separator (4, 4', 4", 4‴, 4"", 4^{v}, 4^{vi}, 30, 30') with a vertical axis of rotation (8), comprising a rotatably mounted drum (5, 31) with a drum interior for centrifugal processing of a liquid (1), wherein the separator (4, 4', 4", 4'", 4"", 4^{v}, 4^{vi}, 30, 30') has at least one gas supply line (11, 11', 11", 11‴, 11ʺʺ, 11^{v}, 38, 38') for introducing gas (2, 2') into the liquid (1), which opens into the drum interior, **characterized in that** the separator (4, 4', 4", 4'", 4ʺʺ, 4^{v}, 4^{vi}, 30, 30') is designed in a sealed version, wherein a separating space of the drum (5, 31) is sealed or insulated from the environment in the inlet region and/or in the outlet region by mechanical seals or fluid-mechanical seals.

2. Separator according to claim 1, **characterized in that** the gas supply line (11, 11', 11", 11‴, 11ʺʺ, 11^{v}, 38, 38') is designed as a supply pipe and/or as a supply channel.

3. Separator according to claim 1 or 2, **characterized in that** the separator (4, 4', 4", 4‴, 4"", 4^{v}, 4^{vi}, 30, 30') has a sensor (18) for determining the gas content in the gas-containing liquid (4).

4. Separator according to claim 1, 2 or 3, **characterized in that** the separator (4, 4', 4", 4‴, 4ʺʺ, 4^{v}, 4^{vi}, 30, 30') has a discharge pipe (16) for discharging a gas-containing liquid (4) from the separator (4, 4', 4", 4‴, 4"", 4^{v}, 4^{vi}, 30, 30'), wherein the discharge pipe (16) has the sensor (18) for determining the gas content in the gas-containing liquid (4).

5. Separator according to one of the preceding claims, **characterized in that** the separator (4, 4', 4", 4‴, 4ʺʺ, 4^{v}, 4^{vi}, 30, 30') has a measuring and/or evaluation unit (19) for adjusting the gas pressure of the gas (1, 1') supplied via the gas supply line (11, 11', 11", 11‴, 11ʺʺ, 11^{v}, 38, 38').

6. Separator according to one of the preceding claims, **characterized in that** the separator (4, 4', 4", 4‴, 4ʺʺ, 4^{v}, 4^{vi}, 30, 30') has a valve (20) for adjusting the gas pressure of the gas (1, 1') supplied via the gas supply line (11, 11', 11", 11‴, 11ʺʺ, 11", 38, 38'), wherein the valve (20) is arranged along the gas supply line (11, 11', 11", 11‴, 11"", 11^{v}, 38, 38') and can be adjusted via the measuring and/or evaluation unit (19).

7. Separator according to one of the preceding claims, **characterized in that** the separator (4", 4‴, 30) has a distribution chamber (17) for radial discharge of the axially introduced liquid (1), wherein the gas supply line (11", 11‴) opens into the distribution chamber (17).

8. Separator according to one of the preceding claims, **characterized in that** the separator (4, 4') has a paring chamber (9), wherein the gas supply line (11, 11') opens into the paring chamber (9).

9. Separator according to one of the preceding claims, **characterized in that** the separator (4ʺʺⁱ, 30) has a drive spindle (7, 32), wherein the drum (5, 31) is driven via the drive spindle (7, 32), wherein the gas supply line (11"", 38) is designed at least in some regions as a channel within the drive spindle (7, 32), which channel opens into the drum interior of the drum (5, 31).

10. Separator according to one of the preceding claims, **characterized in that** the separator (4^{v}, 4^{vi}) has at least two gas supply lines (11', 11", 11^{v}) for introducing gas at two different positions of the drum (5).

11. Method for operating a separator (4^{v}, 4^{vi}) according to one of the preceding claims, **characterized in that** a first gas (2) is introduced into the liquid (1) via a first gas supply line (11") after it has been introduced into the separator (4^{v}, 4^{vi}).

12. Method according to claim 11, **characterized in that** a second gas (2') is introduced into the liquid (1) after it has been introduced into the separator (4^{v}, 4^{vi}) via a second gas supply line (11', 11^{v}).

13. Method according to claim 11 or 12, **characterized in that** the first and/or second gas (2, 2') is CO₂.

14. Method according to claim 11 or 12, **characterized in that** the method is a carbonation of a beverage, in particular beer.

## Revendications

1. Séparateur (4, 4', 4", 4‴, 4"", 4^{v}, 4^{vi}, 30, 30'), en particulier séparateur (4, 4', 4", 4‴, 4"", 4^{v}, 4^{vi}, 30, 30') à axe de rotation (8) vertical, comprenant un tambour (5, 31) supporté avec possibilité de rotation avec un espace intérieur de tambour pour la centrifugation d'un liquide (1), le séparateur (4, 4', 4", 4‴, 4ʺʺ, 4^{v}, 4^{vi}, 30, 30') comprenant au moins une conduite d'arrivée de gaz (11, 11', 11^{v}, 11‴, 11ʺʺ, 11^{v}, 38, 38') destinée à amener du gaz (2, 2') dans le liquide (1) et qui débouche dans l'espace intérieur du tambour,
**caractérisé en ce que** le séparateur (4, 4', 4", 4‴, 4ʺʺ, 4^{v}, 4^{vi}, 30, 30') est réalisé selon une construction étanche, un espace de séparation du tambour (5, 31) étant étanchéifié ou isolé de l'environnement dans la zone d'arrivée et/ou la zone de sortie par des garnitures d'étanchéité mécanique ou des garnitures mécaniques à fluide.

2. Séparateur selon la revendication 1, **caractérisé en ce que** la conduite d'arrivée de gaz (11, 11', 11", 11‴, 11"", 11^{v}, 38, 38') est construite comme un tuyau d'arrivée et/ou comme un canal d'arrivée.

3. Séparateur selon la revendication 1 ou 2, **caractérisé en ce que** le séparateur (4, 4', 4", 4‴, 4"", 4^{v}, 4"', 30, 30') comprend un capteur (18) pour déterminer la teneur en gaz dans le liquide (4) contenant du gaz.

4. Séparateur selon la revendication 1, 2 ou 3, **caractérisé en ce que** le séparateur (4, 4', 4", 4‴, 4"", 4^{v}, 4"', 30, 30') comprend un tuyau d'écoulement (16) pour l'évacuation d'un liquide (4) contenant du gaz hors du séparateur (4, 4', 4", 4‴, 4"", 4^{v}, 4"', 30, 30'), lequel tuyau d'écoulement (16) comprend le capteur (18) pour déterminer la teneur en gaz du liquide (4) contenant du gaz.

5. Séparateur selon l'une des revendications précédentes, **caractérisé en ce que** le séparateur (4, 4', 4", 4‴, 4"", 4^{v}, 4"', 30, 30') comprend une unité de mesure et/ou d'analyse (19) pour le réglage de la pression de gaz du gaz (1, 1') amené via la conduite d'arrivée de gaz (11, 11', 11", 11‴, 11"", 11^{v}, 38, 38').

6. Séparateur selon l'une des revendications précédentes, **caractérisé en ce que** le séparateur (4, 4', 4", 4‴, 4"", 4^{v}, 4"', 30, 30') comprend une vanne (20) pour le réglage de la pression de gaz du gaz (1, 1') amené via la conduite d'arrivée de gaz (11, 11', 11", 11‴, 11"", 11^{v}, 38, 38'), laquelle vanne (20) est disposée le long de la conduite d'arrivée de gaz (11, 11', 11^{v}, 11‴, 11"", 11^{v}, 38, 38') et peut être réglée par l'unité de mesure et/ou d'analyse (19).

7. Séparateur selon l'une des revendications précédentes, **caractérisé en ce que** le séparateur (4", 4‴, 30) comprend un espace de distribution (17) pour l'évacuation radiale du liquide (1) introduit dans le sens axial, la conduite d'arrivée de gaz (11", 11‴) débouchant dans l'espace de distribution (17).

8. Séparateur selon l'une des revendications précédentes, **caractérisé en ce que** le séparateur (4, 4') comprend une chambre de turbine centripète (9), la conduite d'arrivée de gaz (11, 11') débouchant dans la chambre de turbine centripète (9).

9. Séparateur selon l'une des revendications précédentes, **caractérisé en ce que** le séparateur (4""', 30) comprend une broche d'entraînement (7, 32), le tambour (5, 31) étant entraîné par la broche d'entraînement (7, 32), la conduite d'arrivée de gaz (11"", 38) étant au moins en partie formée comme un canal à l'intérieur de la broche d'entraînement (7, 32), qui débouche dans l'espace intérieur du tambour du tambour (5, 31).

10. Séparateur selon l'une des revendications précédentes, **caractérisé en ce que** le séparateur (4^{v}, 4^{vi}) comprend au moins deux conduites d'arrivée de gaz (11', 11", 11^{v}) pour amener du gaz dans deux positions différentes du tambour (5).

11. Procédé pour la conduite d'un séparateur (4^{v}, 4^{vi}) selon l'une des revendications précédentes, **caractérisé en ce qu'**un premier gaz (2) est introduit dans le liquide (1) après que celui-ci a été introduit dans le séparateur (4^{v}, 4^{vi}) via une première conduite d'arrivée de gaz (11").

12. Procédé selon la revendication 11, **caractérisé en ce qu'**un deuxième gaz (2') est introduit dans le liquide (1) après que celui-ci a été introduit dans le séparateur (4v, 4^{vi}) via une deuxième conduite d'arrivée de gaz (11', 11").

13. Procédé selon la revendication 11 ou 12, **caractérisé en ce que** le premier et/ou le deuxième gaz (2, 2') est du CO₂.

14. Procédé selon la revendication 11 ou 12, **caractérisé en ce que** le procédé est une carbonatation d'une boisson, en particulier de bière.
